(19) Europäisches Patentamt
European Patent Office
Office européen des brevets

(11) Veröffentlichungsnummer: **0 610 807 B1**

(12) **EUROPÄISCHE PATENTSCHRIFT**

(45) Veröffentlichungstag der Patentschrift: **06.09.95**

(51) Int. Cl.⁶: **C07F 7/16**

(21) Anmeldenummer: **94101623.0**

(22) Anmeldetag: **03.02.94**

(54) **Verfahren zur Herstellung von Methylchlorsilanen.**

(30) Priorität: **09.02.93 DE 4303766**

(43) Veröffentlichungstag der Anmeldung:
**17.08.94 Patentblatt 94/33**

(45) Bekanntmachung des Hinweises auf die
Patenterteilung:
**06.09.95 Patentblatt 95/36**

(84) Benannte Vertragsstaaten:
**DE ES FR GB**

(56) Entgegenhaltungen:
**EP-A- 0 372 341**
**EP-A- 0 372 918**
**DE-A- 4 037 021**

**CHEMICAL ABSTRACTS, vol. 118, no. 18, 3.**
**Mai 1993, Columbus, Ohio, US; abstract no.**
**171444g, H.M. RONG ET AL**

**CHEMICAL ABSTRACTS, vol. 118, no. 24, 14.**
**Juni 1993, Columbus, Ohio, US; abstract no.**
**236935q, A. SCHEI ET AL**

(73) Patentinhaber: **Wacker-Chemie GmbH**
**Hanns-Seidel-Platz 4**
**D-81737 München (DE)**

(72) Erfinder: **Pachaly, Bernd, Dr.**
**Robert-Koch-Strasse 167**
**D-84489 Burghausen (DE)**
Erfinder: **Frey, Volker, r.**
**Jahnweg 5**
**D-84489 Burghausen (DE)**
Erfinder: **Straussberger, Herbert**
**Heidegasse 4**
**D-84561 Mehring (DE)**

**Beschreibung**

Die Erfindung betrifft ein Verfahren zur Herstellung von Methylchlorsilanen durch Direktsynthese unter Verwendung von Silicium mit bestimmten Strukturmerkmalen.

Bei der Direktsynthese von Methylchlorsilanen aus Silicium und Chlormethan nach dem Rochow-Verfahren in Gegenwart eines Kupferkatalysators und gegebenenfalls Promotorsubstanzen entsteht ein Gemisch der Methylchlorsilane und in geringerer Menge anderer Nebenprodukte. Der Mechanismus und das Produktspektrum sind beispielsweise beschrieben in M.P. Clarke, Journal of Organometallic Chemistry, 376 (1989) 165-222. Der Einfluß des Katalysators und der Promotoren ist beispielsweise beschrieben in W.J. Ward et al., Journal of Catalysis, 100 (1986) 240-249.

Siliciummetall wird in elektrisch beheizten Öfen durch Reduktion von Siliciumdioxid mit Kohle, gegebenenfalls unter Beimischung von Holzspänen, erzeugt. Das Rohprodukt wird durch geeignete Raffinationsverfahren auf die für die Herstellung von Methylchlorsilanen erforderliche Reinheit gebracht. Das raffinierte Silicium wird dann üblicherweise aus den Raffinationstiegeln in Eisenmulden gegossen, aus denen es nach Erstarrung entnommen und durch Brechen und Sieben aufbereitet wird. Zum Einsatz in der Direktsynthese wird es auf Korngrößen von bis ca. 500 $\mu$m vermahlen.

Relativ gut untersucht sind die Anforderungen an das Silicium bezüglich chemischer Zusammensetzung und Partikelgrößenverteilung für die Direktsynthese; der strukturelle Aufbau und dessen Einfluß auf die Umsetzung mit Chlormethan ist erst seit kurzer Zeit Gegenstand wissenschaftlicher Untersuchungen. Die EP-A 350 683 offenbart, daß die Struktur, bestimmt durch den Abkühlungsprozeß bei der Herstellung des Siliciummetalls, Einfluß auf die Direktsynthese hat, weil durch Verdüsung erzeugtes Siliciummetall erhöhte Produktionsraten zeigt.

Die Struktur des Siliciummetalls wird bestimmt durch die Größe der Kristallite des polykristallinen Siliciums sowie die Zusammensetzung und Lage der intermetallischen Phasen, die sich im Verlauf der Abkühlung und Erstarrung im Herstellungsprozeß aus den Hauptverunreinigungen, z. B. Al, Ca, Fe, Ti, mit Silicium ausscheiden. Die Zusammensetzung dieser Phasen ist u. a. beschrieben in F. Dubrous et al., Electric Furnace Conf. Proc., 1990, S. 241-247, die Beeinflußbarkeit der Ausbildung dieser Phasen bei A. Schei et al., Proc. Conf. Silicon for Chemical Industry, 1992, S. 11-23. Ein Verfahren zur Verbesserung der Eigenschaften durch rasche Erstarrung wird bei G. Schüssler et al., Proc.-Conf. Silicon Metal for Chemical Industry, 1992, S. 39-46, beschrieben, der Einfluß der Kristallstruktur auf die Direktsynthese bei H. Rong et al., Proc.-Conf. Silicon Metal for Chemical Industry, 1992, 67-83.

Es ist somit bekannt, daß die Ausbeute und Selektivität der Direktsynthese von der Struktur des Siliciums abhängt, wobei die Struktur durch die Wahl der Abkühlungsbedingungen beim Erstarrungsprozeß des Siliciums und gegebenenfalls nachgeschaltete Temperung beeinflußt werden kann.

Aufgabe der Erfindung war es, ein verbessertes verfahren zur Direktsynthese von Methylchlorsilanen bereitzustellen, bei dem die gewünschten Methylchlorsilane in möglichst hohen Produktionsraten hergestellt werden können und der Anfall an Nebenprodukten so gering wie möglich ist. Eine weitere Aufgabe der Erfindung war es, Silicium mit dem die beste Produktionsrate für die gewünschten Methylchlorsilane, insbesondere, Dimethyldichlorsilan erzielt werden kann, durch Strukturkennzahlen zu beschreiben, damit Silicium mit der gewünschten Struktur hergestellt werden kann.

Die Erfindung betrifft ein Verfahren zur Herstellung von Methylchlorsilanen aus Silicium und Chlormethan in Gegenwart eines Kupferkatalysators und gegebenenfalls Promotorsubstanzen, bei dem die Produktionsraten der einzelnen Methylchlorsilane bezogen auf die Oberfläche des eingesetzten Siliciums durch die Struktur des Siliciums gesteuert werden, wobei das verfahren dadurch gekennzeichnet ist, daß Silicium mit der Strukturkennzahl QF 18 bis 60 ausgewählt wird, wobei die Strukturkennzahl QF ermittelt wird, indem

a) Siliciumprobekörper unter Ausbildung einer Schnittfläche aufgeschnitten werden,
b) auf der Schnittfläche die Flächen der eine längliche Form aufweisenden Ausscheidungen intermetallischer Phasen mit einem Rundheitsgrad > 2 zu einer Flächenzahl A aufsummiert werden,
c) auf der Schnittfläche die Flächen der eine rundliche Form aufweisenden Ausscheidungen intermetallischer Phasen mit einem Rundheitsgrad $\leqq$ 2 zu einer Flächenzahl B aufsummiert werden und
d) der als die strukturkennzahl QF bezeichnete Quotient aus der Flächenzahl A und der Flächenzahl B gebildet wird.

Bei dem erfindungsgemäßen Verfahren werden die Strukturmerkmale des Siliciums durch die Strukturkennzahl QF beschrieben, welche durch ein neues Verfahren zur Strukturanalyse zugänglich ist. Die Korrelation der Strukturkennzahlen QF verschiedener Siliciumstrukturtypen mit deren Verhalten bei der Direktsynthese erlaubt die Erkennung optimaler Strukturmerkmale im Silicium und somit die Steuerung der Selektivität und Ausbeuten für die gewünschten Methylchlorsilane in die gewünschte Richtung.

2

Bei der Abkühlung und Erstarrung scheidet sich reines, primäres Silicium in Form von Kristalliten ab, die durch Korngrenzen getrennt sind. Neben dem primären Silicium bilden sich im Silicium Ausscheidungen intermetallischer Phasen, sowie Poren und Einschlüsse von Schlacke. Die Ausscheidungen intermetallischer Phasen treten innerhalb der Kristallite bevorzugt in rundlicher Form auf, und entlang den Korngrenzen bevorzugt in länglicher Form.

Primäres Silicium, intermetallische Phasen sowie Poren und Schlacke lassen sich beispielsweise im Schwarzweißbild über die Graustufe unterscheiden, intermetallische Phasen im primären Silicium und entlang Korngrenzen beispielsweise über den Rundheitsgrad.

Eine bevorzugte Ausführungsform zur Bestimmung der Strukturkennzahl QF von Siliciummetall besteht daraus, daß Silicium-Probekörper mit einem Durchmesser von etwa 5 bis 25 mm in ein Gießharz eingegossen werden, wie es in der Metallographie üblich ist. Nach Schleifen und Polieren werden über ein Lichtmikroskop Bilder mit 10- bis 1000-facher Vergrößerung über eine Video-Kamera in ein handelsübliches Bildanalysesystem, z. B. Quantimet® 500 der Fa. Leitz, eingespielt. Als Ergebnis der Bildanalyse, die in der im Bedienungshandbuch beschriebenen Weise durchgeführt wird, wird der Flächenanteil der länglichen intermetallischen Phasen als Flächenzahl A und der Flächenanteil der rundlichen intermetallischen Phasen als Flächenzahl B ausgewiesen. Das Bildanalysesystem unterscheidet beispielsweise die länglichen Formen und die runden Formen anhand des jeweiligen Rundheitsgrads. Beispielsweise werden Formen mit einem Rundheitsgrad > 2 als länglich eingestuft und Formen mit einem Rundheitsgrad ≤ 2 als rundlich. Als Rundheitsgrad für die Einstufung als länglich oder rundlich wird vorzugsweise ein Wert von 1,5 bis 2,5 gewählt.

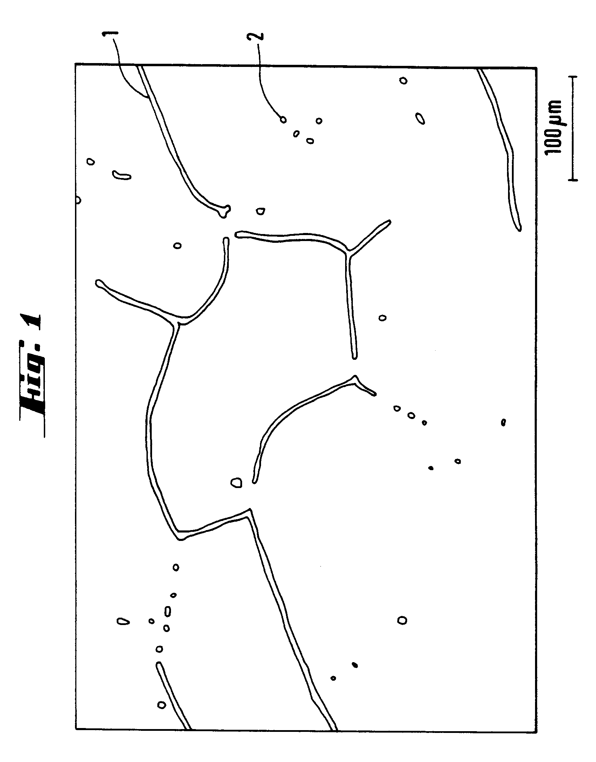

Figur 1 zeigt die Schnittfläche eines geschliffenen und polierten Siliciumprobekörpers in ca. 250 facher Vergrößerung unter einem Lichtmikroskop. Die länglichen (1) und die rundlichen (2) Ausscheidungen intermetallischer Phasen sind graphisch hervorgehoben.

Bei manchen Siliciumsorten, insbesondere wenn diese durch schnelles Abkühlen hergestellt worden sind, können die Ausscheidungen intermetallischer Phasen, die bevorzugt entlang den Korngrenzen vorkommen, teilweise als kettenförmige Aufreihung rundlicher Formen erscheinen. Diese kettenförmigen Ausscheidungen intermetallischer Phasen sind dann dem Flächenanteil A zuzurechnen. Dies kann beispielsweise dadurch geschehen, daß die betreffenden intermetallischen Phasen durch sehr dünne Linien, die in das Bild durch eine Rechneroperation eingefügt werden, verbunden werden und die kettenförmigen Ausscheidungen zu länglichen Teilchen transformiert werden.

Für Siliciummetall mit der elementaren Zusammensetzung, die üblicherweise in der Direktsynthese von Methylchlorsilanen eingesetzt wird (Al 0,10 - 0,28 Gew.-%, Ca 0 - 0,15 Gew.-%, Fe 0,15 - 0,50 Gew.-%, Ti 0,015 - 0,05 Gew.-%) ergibt sich, daß der Quotient QF = A/B von den Erstarrungsbedingungen bestimmt wird und somit als Strukturkennzahl QF zur Beschreibung der Strukturmerkmale verwendet werden kann.

Die Unterscheidung der Ausscheidungen intermetallischer Phasen in rundlicher Form von den Ausscheidungen intermetallischer Phasen in länglicher Form und die Ermittlung der Flächenzahlen A und B, sowie die Berechnung der Strukturkennzahl QF können durch beliebige andere Verfahren, beispielsweise unter Benutzung eines Elektronenmikroskops vorgenommen werden.

Als aussagekräftige Größe für die Angabe der Raum-Zeit-Ausbeute für ein bestimmtes Methylchlorsilan unter Verwendung eines bestimmten Siliciumtyps wird die auf die Oberfläche des Siliciums bezogene Produktionsrate

$$PR = \frac{\text{Masse des Methylchlorsilans}}{\text{Oberfläche des Siliciums x Zeiteinheit}} \left[ \frac{mg}{m^2 \text{ x min}} \right]$$

angegeben. Der Bezug auf die Oberfläche wird vorgenommen, weil die Reaktionen an der Oberfläche des Siliciums ablaufen. Ferner wird in modernen Direktsyntheseverfahren nicht alles eingeschleuste Silicium restlos verbraucht, sondern ausgeschleust, bevor sich das Verhältnis von Silicium, Katalysator und Promotoren ungünstig erweist.

Ein besonderer Vorteil ist die Unabhängigkeit der so ermittelten Produktionsrate von der Oberfläche des Siliciums.

Ein bestimmtes Methylchlorsilan soll in möglichst hoher Produktionsrate hergestellt werden können und der Anfall an unerwünschten Nebenprodukten soll so gering wie möglich sein. Um dieses Erfordernis zahlenmäßig zu erfassen werden von der Produktionsrate (PR) des Zielprodukts die Produktionsraten der Nebenprodukte abgezogen. Beispielsweise ist ein Direktsyntheseverfahren besonders erwünscht, bei dem Dimethyldichlorsilan (M2) neben möglichst geringen Mengen an Methyltrichlorsilan (M1), Hochsiedern (HS) mit dem Siedebereich 75°C bis 165°C bei 0,1 MPa und Methyldichlorsilan (HM) hergestellt wird, weil M1, HS und HM aufgrund der vorgegebenen mengenmäßig begrenzten Verwertbarkeit nicht den gleichen wirtschaftlichen Wert darstellen.

Formelmäßig ausgedrückt soll dann das erwünschte Direktsyntheseverfahren eine möglichst hohe Produktionsrate PRM2 - (PRM1 + PRHS + PRHM) aufweisen, wobei PRM2 die Produktionsrate an M2 bedeutet. Diese hohe Produktionsrate wird erreicht, wenn im erfindungsgemäßen Verfahren Silicium mit der Strukturkennzahl QF 18 bis 60, insbesondere 25 bis 35 eingesetzt wird, wobei zur Ermittlung der Strukturkennzahl die Flächen der eine längliche Form aufweisenden Ausscheidungen intermetallischer Phasen mit einem Rundheitsgrad > 2 zu der Flächenzahl A aufsummiert werden, und die Flächen der eine rundliche Form aufweisenden Ausscheidungen intermetallischer Phasen mit einem Rundheitsgrad $\leq$ 2 zu der Flächenzahl B aufsummiert werden.

Der Rundheitsgrad wird nach der bekannten Formel

$$\text{Rundheitsgrad} = \frac{\text{Umfang}}{4 \times \pi \times \text{Fläche} \times 1{,}064}$$

berechnet.

Die Reaktivität und Selektivität von Siliciummetall ist in der Synthese von Methylchlorsilanen bei gleicher chemischer Zusammensetzung und konstanten Reaktionsbedingungen, wie Druck, Temperatur, Chlormethanmenge, Katalysatormenge und Korngröße des Siliciums eine Funktion der Struktur. Die Struktur wird von der Abkühlrate beim Erstarrungsprozeß bestimmt.

Langsames Abkühlen des flüssigen Siliciums führt zu kleinen Strukturkennzahlen QF und schnelles Abkühlen zu hohen Werten.

Zahlreiche an sich bekannte Verfahren zur Abkühlung eignen sich zum Einstellen der gewünschten Strukturkennzahl.

Beispielsweise wird bei der häufigsten Durchführung des Erstarrungsprozesses das flüssige Silicium in eine gußeiserne Gießmulde gefüllt, in der es erstarrt. Durch Isolieren der Gießmulde mit Siliciumstaub von außen und Gießen des Siliciums auf eine in der Gießmulde befindliche Siliciumstaubschicht können beispielsweise nach vorstehender bevorzugter Ausführungsform ermittelbare Strukturkennzahlen QF von 0,05 bis 0,25 erreicht werden.

Durch dünnere Gußhöhen und schwächere Isolierung werden Strukturkennzahlen QF bis etwa 7 erreicht. Durch Kühlung der Gießmulde, durch Gießen von dünnen Schichten in mehreren Lagen oder durch kontinuierliches Gießen auf Siliciumgranulat werden Werte bis etwa 11 erhalten. Durch Eingießen von Silicium in Wasser sind Strukturkennzahlen QF von 18 bis 60 erreichbar, wobei beispielsweise durch Variieren der Granulatgröße des wassergranulierten Siliciums die Strukturkennzahl QF im Bereich von 25 bis 35 genau eingestellt werden kann. Das nach beispielsweise dem Verfahren von G. Schüssler et al., Proc.-Conf. Silicon Metal for Chemical Industry, 1992, S. 39-46, durch Verdüsen in Luft erhaltene Silicium weist Strukturkennzahlen QF von über 60 auf.

Die üblicherweise bei der Direktsynthese eingesetzten Siliciumsorten weisen Strukturkennzahlen QF von etwa 2 bis 5 auf. Im Bereich sehr langsamer Abkühlung, bei einem Silicium mit der Strukturkennzahl QF 0,1 bis 2 überlagern Tempereffekte mit Diffusion und Neubildung intermetallischer Phasen den Erstarrungsprozeß. Dadurch steigt die Produktionsrate an Rohsilan an. Ebenso steigt die Produktionsrate an Rohsilan bei schneller Abkühlung. Verdüstes Silicium führt zu den höchsten bekannten Produktionsraten an Rohsilan. Die höchste Produktionsrate PRM2 - (PRM1 + PRHS + PRHM) wird jedoch erst durch die Anwendung des erfindungsgemäßen Verfahrens erreicht, weil dadurch gezielt Silicium mit den optimalen Strukturkennzahlen eingesetzt wird.

Im den nachfolgenden Beispiel sind, falls jeweils nicht anders angegeben,
a) alle Mengenangaben auf das Gewicht bezogen;
b) alle Drücke 0,10 MPa (abs.);

c) alle Temperaturen 20° C und
d) bedeuten die nachstehenden Abkürzungen:
    QF:    die Strukturkennzahl QF

Beispiel

**a) Silicium-Typen**

Eine Reihe von 13 Silicium-Typen ähnlicher chemischer Zusammensetzung, die die technischen Möglichkeiten zur Steuerung von Erstarrungsbedingungen repräsentieren, wurden auf ihre Strukturkennzahl QF und in einem standardisierten Labortest zur Umsetzung mit Chlormethan nach dem Direktsyntheseverfahren auf ihre Leistungsfähigkeit hin untersucht.

In Tabelle 1 sind die Gehalte der Verunreinigungen an Aluminium, Calcium und Eisen in Gew-%, die nach vorstehender bevorzugter Ausführungsform ermittelten Strukturkennzahlen QF und die jeweils gewählten Erstarrungsbedingungen der Silicium-Strukturtypen aufgeführt.

Bei den Silicium-Typen Nr.1-9 wurde das flüssige Silicium in eine gußeiserne Gießmulde gefüllt, in der es erstarrte. Die Gießmulde wurde teilweise mit Siliciumstaub von außen isoliert. Teilweise wurde das Silicium auf eine am Boden und an den Wänden der Gießmulde befindliche Siliciumstaubschicht gegossen. Die dünne Siliciumstaubschicht betrug etwa 2 - 5 mm und die dicke Siliciumstaubschicht betrug etwa 10 - 20 mm. Bei den Silicium-Typen Nr. 11 und 12 wurde das flüssige Silicium in Wasser eingegossen. Bei dem Silicium-Typ Nr. 13 wurde flüssiges Silicium nach dem Verfahren von G. Schüssler et al., Proc.-Conf. Silicon Metal for Chemical Industry, 1992, S. 39-46, in Luft verdüst.

**Tabelle 1**

| Si-Type | Al | Ca | Fe | Struk-tur-kenn-zahl QF | Erstarrungsprozeß |
|---|---|---|---|---|---|
| Nr.1 | 0,19 | 0,010 | 0,28 | 0,10 | Mulde isoliert/Guß auf dicke Si-Staubschicht, Gießhöhe 35 cm |
| Nr.2 | 0,18 | 0,014 | 0,18 | 0,25 | Mulde isoliert/Guß auf dünne Si-Staubschicht, Gießhöhe 50 cm |
| Nr.3 | 0,18 | 0,019 | 0,28 | 0,26 | Mulde nicht isoliert/ Guß auf dicke Si-Staub- schicht, Gießhöhe 40 cm |

5

| Si-Type | Al | Ca | Fe | Struk-tur-kenn-zahl QF | Erstarrungsprozeß |
|---|---|---|---|---|---|
| Nr.4 | 0,18 | 0,011 | 0,21 | 1,58 | Mulde nicht isoliert/ Guß auf dünne Si-Staub-schicht, Gießhöhe 40 cm |
| Nr.5 | 0,26 | 0,047 | 0,41 | 2,34 | Mulde nicht isoliert/ Guß auf dünne Si-Staub-schicht, Gießhöhe 30 cm |
| Nr.6 | 0,17 | 0,025 | 0,37 | 3,19 | Mulde nicht isoliert, 4 Lagen à 15 cm, 2. Lage von oben |
| Nr.7 | 0,21 | 0,016 | 0,54 | 4,13 | Mulde nicht isoliert/ Guß auf dünne Si-Staub-schicht, Gießhöhe 15 cm |
| Nr.8 | 0,17 | 0,038 | 0,47 | 6,02 | Mulde nicht isoliert/ Guß auf dünne Si-Staub-schicht, Gießhöhe 10 cm |
| Nr.9 | 0,26 | 0,061 | 0,34 | 7,86 | Mulde nicht isoliert/ Guß in Mulde ohne Si-staublage, Gießhöhe 8 cm, Mulde wasser-gekühlt |
| Nr.10 | 0,21 | 0,022 | 0,39 | 10,09 | Kontinuierlich gegossen auf Si-Granulat, Gieß-höhe 1 cm |
| Nr.11 | 0,24 | 0,056 | 0,39 | 23,21 | Wassergranuliert, 10 - 15 mm Durchmesser |
| Nr.12 | 0,19 | 0,027 | 0,25 | 29,55 | Wassergranuliert, 5 - 10 mm Durchmesser |
| Nr.13 | 0,28 | 0,004 | 0,28 | 63,92 | Verdüst, Durchmesser 50 - 500 $\mu$m |

**b) Direktreaktion**

Die vorstehenden Siliciumtypen 1 bis 13 wurden in einem standartisierten Testverfahren zur Direktreaktion von Silicium mit Chlormethan in Gegenwart eines Kupferkatalysators zu Methylchlorsilanen eingesetzt: In einem Labor-Wirbelschichtreaktor mit Heizwicklung, Gasverteilungsfritte, Destillationsbrücke mit Sole-Kühlung und graduiertem Vorlagegefäß wurden 120 g Siliciumpulver bekannter spezifischer Oberfläche der Korngröße 70 - 250 $\mu$m vermischt mit einem Katalysatorgemisch aus 6 g Kupfer(II)-oxid, 1 g Zinkoxid und 6 mg Zinnpulver vorgelegt. Nach Aufheizen auf 350 °C wurden 40 l/h Methylchlorid eingeleitet. Die Rohsilanbildung setzte nach 24 bis 37 Minuten ein. Die ersten 50 ml Rohsilan wurden aufgefangen und verworfen. Dann wurden 30 ml Rohsilan aufgefangen und die Zeit zur Produktion dieser Menge gemessen. Die Rohsilanzusammensetzung wurde mittels Gaschromatographie in Gewichtsprozent ermittelt.

6

In Tabelle II ist die Zeit bis zum Anspringen der Reaktion = T in Minuten, die Produktionsrate an Rohsilan = PRR

$$PRR = \frac{\text{Masse des Rohsilans}}{\text{Oberfläche des Siliciums x Zeiteinheit}} \quad \left[ \frac{mg}{m^2 \text{ x min}} \right]$$

bei einem Si-Umsatzintervall von 9 - 14 % und die Zusammensetzung des Rohsilans, bezüglich der wichtigsten Komponenten Methyldichlorsilan = HM, Methyltrichlorsilan = M1, Trimethylchlorsilan = M3, Dimethyldichlorsilan = M2 und Hochsieder = HS in Gewichtsprozent angegeben. Als Hochsieder werden Komponenten im Siedebereich von 75 - 165°C bezeichnet.

Tabelle II

| Silicium-Type | QF | T | HM | M1 | M3 | M2 | HS | PRR |
|---|---|---|---|---|---|---|---|---|
| Nr. 1 | 0,10 | 37 | 0,82 | 6,40 | 3,52 | 82,57 | 6,40 | 87 |
| Nr. 2 | 0,25 | 31 | 0,82 | 6,72 | 3,31 | 84,40 | 4,51 | 78 |
| Nr. 3 | 0,26 | 32 | 0,67 | 7,57 | 3,77 | 83,77 | 4,04 | 87 |
| Nr. 4 | 1,58 | 30 | 0,71 | 8,51 | 4,06 | 82,39 | 4,05 | 75 |
| Nr. 5 | 2,34 | 29 | 1,07 | 7,79 | 4,03 | 83,11 | 4,21 | 61 |
| Nr. 6 | 3,19 | 26 | 1,03 | 7,54 | 3,63 | 83,50 | 3,97 | 79 |
| Nr. 7 | 4,13 | 25 | 0,78 | 7,30 | 3,78 | 84,24 | 3,98 | 89 |
| Nr. 8 | 6,02 | 26 | 0,56 | 6,90 | 3,64 | 84,88 | 3,82 | 97 |
| Nr. 9 | 7,86 | 26 | 0,94 | 6,79 | 3,62 | 85,19 | 3,26 | 99 |
| Nr. 10 | 10,09 | 24 | 0,96 | 6,92 | 3,50 | 85,32 | 3,02 | 105 |
| Nr. 11 | 23,21 | 30 | 1,97 | 5,97 | 2,53 | 86,11 | 3,02 | 118 |
| Nr. 12 | 29,55 | 31 | 2,25 | 5,75 | 2,58 | 86,07 | 2,80 | 120 |
| Nr. 13 | 63,92 | 33 | 3,78 | 7,77 | 2,14 | 81,20 | 2,59 | 125 |

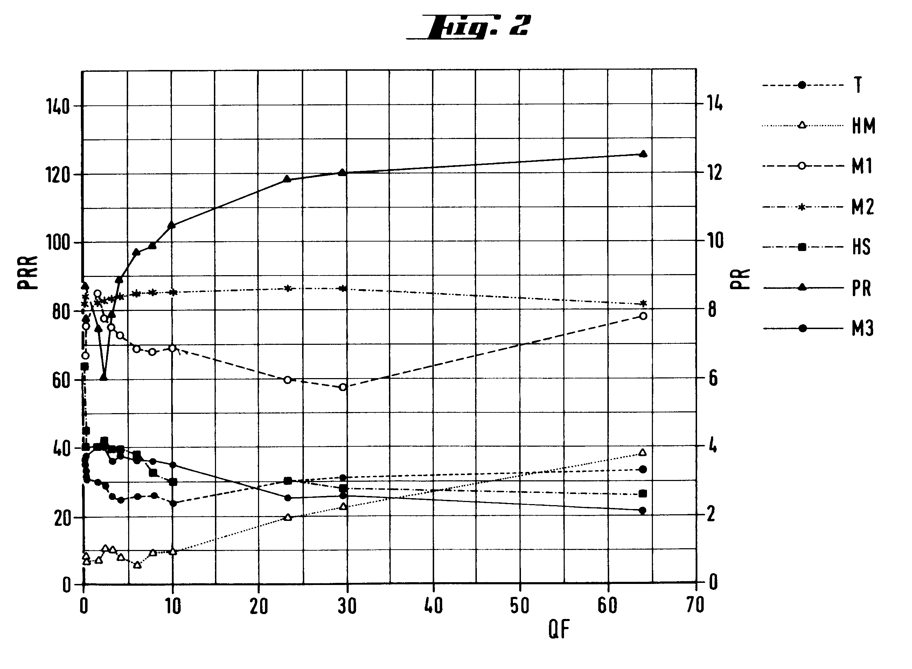

In Figur 2 sind die Ergebnisse aus Tabelle II graphisch dargestellt. An der Abszisse sind die Strukturkennzahlen QF der eingesetzten Silicium-Typen aufgeführt. An der linken Ordinate ist einerseits die Produktionsrate an Rohsilan PRR in mg / m² x min, andererseits die Anspringzeit T in min aufgetragen. An der rechten Ordinate ist der Anteil der verschiedenen Silane in Gewichtsprozent aufgetragen.

Aus der Produktionsrate für das Rohsilan PRR und den Gewichtsanteilen der Hauptkomponenten M2, M1, HS, M3 und HM wurden die Produktionsraten für die Hauptkomponenten PRM2, PRM1, PRM3, PRHS und PRHM in mg/m² x min. bestimmt und in Tabelle III aufgeführt.

# EP 0 610 807 B1

Tabelle III

| Silicium-Type | PRHM | PRM2 | PRM1 | PRHS | PRM3 |
|---|---|---|---|---|---|
| Nr. 1 | 0,71 | 71,84 | 5,57 | 5,57 | 3,06 |
| Nr. 2 | 0,64 | 65,83 | 5,24 | 3,52 | 2,58 |
| Nr. 3 | 0,58 | 72,88 | 6,59 | 3,51 | 3,28 |
| Nr. 4 | 0,53 | 61,79 | 6,38 | 3,04 | 3,05 |
| Nr. 5 | 0,65 | 50,70 | 4,75 | 2,57 | 2,46 |
| Nr. 6 | 0,81 | 65,97 | 5,96 | 3,14 | 2,87 |
| Nr. 7 | 0,69 | 74,97 | 6,50 | 3,54 | 3,36 |
| Nr. 8 | 0,54 | 82,33 | 6,69 | 3,71 | 3,53 |
| Nr. 9 | 0,94 | 84,34 | 6,72 | 3,23 | 3,58 |
| Nr. 10 | 1,01 | 89,59 | 7,27 | 3,17 | 3,68 |
| Nr. 11 | 2,32 | 101,61 | 7,04 | 3,56 | 2,99 |
| Nr. 12 | 2,7 | 103,28 | 6,90 | 3,36 | 3,10 |
| Nr. 13 | 4,73 | 101,5 | 9,71 | 3,24 | 2,68 |

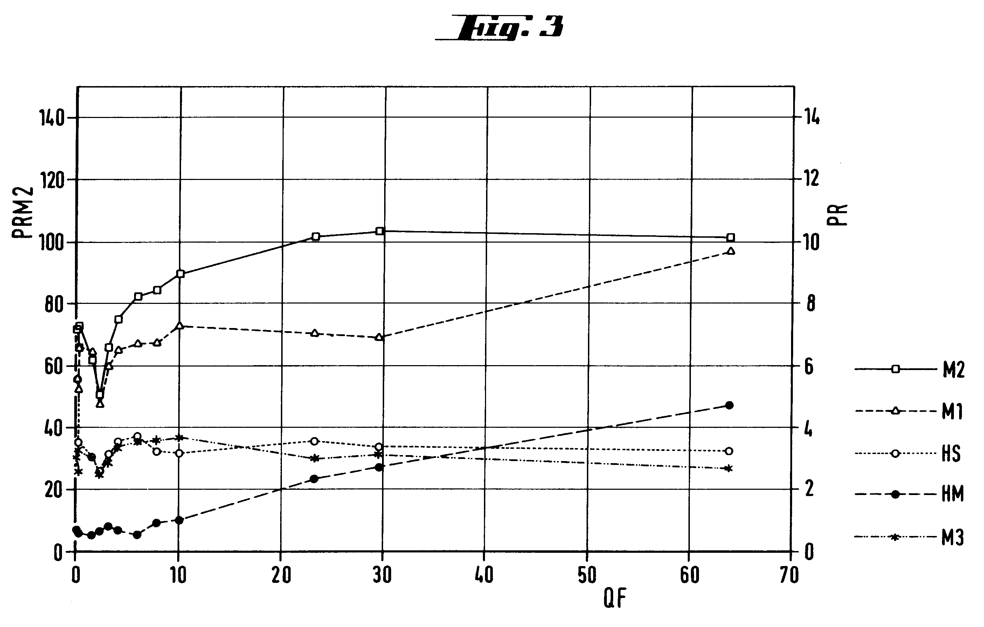

In Figur 3 sind die Ergebnisse aus Tabelle III graphisch dargestellt. An der Abszisse sind die Strukturkennzahlen QF der eingesetzten Silicium-Typen aufgeführt. An der Ordinate ist die Produktionsrate an Rohsilan in mg / $m^2$ x min der verschiedenen Silane aufgetragen.

Das für die Herstellung von M2 am besten geeignete Silicium weist eine hohe Produktionsrate PRM2 - (PRM1 + PRHS + PRHM) auf. Silicium mit der Strukturkennzahl QF 18 bis 60, insbesondere 25 bis 35 erweist sich dabei als optimal. Die wassergranulierten Silicium-Typen Nr. 11 und 12 liegen im optimalen Bereich.

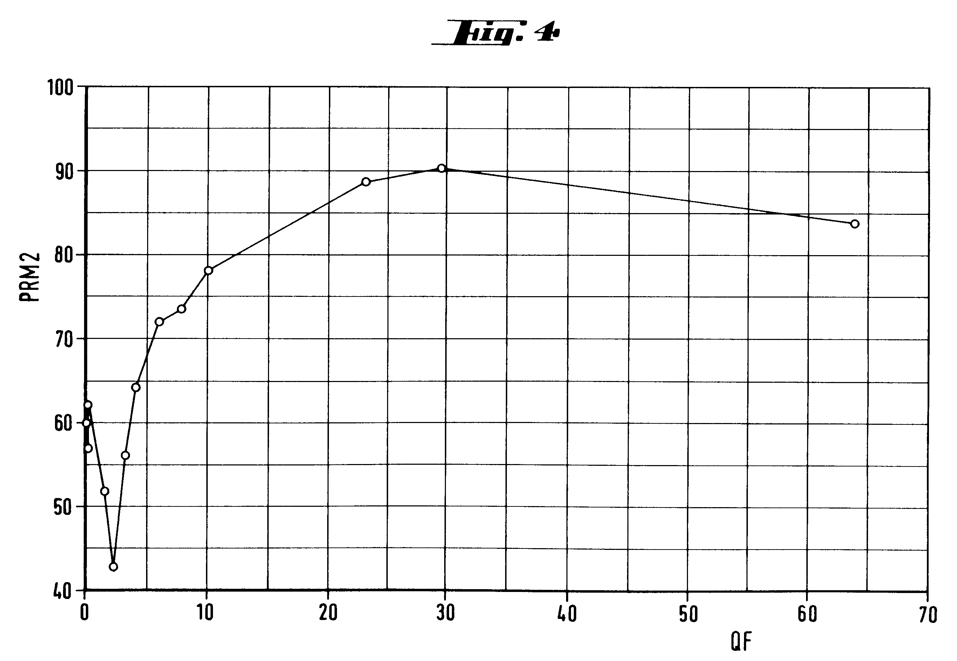

In Figur 4 sind an der Abszisse die Strukturkennzahlen QF der eingesetzten Silicium-Typen aufgeführt. An der Ordinate ist die Produktionsrate PRM2 - (PRM1 + PRHS + PRHM) in mg / $m^2$ x min aufgetragen.

**Patentansprüche**

**1.** Verfahren zur Herstellung von Methylchlorsilanen aus Silicium und Chlormethan in Gegenwart eines Kupferkatalysators und gegebenenfalls Promotorsubstanzen, bei dem die Produktionsraten der einzelnen Methylchlorsilane bezogen auf die Oberfläche des eingesetzten Siliciums durch die Struktur des Siliciums gesteuert werden, **dadurch gekennzeichnet**, daß Silicium mit der Strukturkennzahl QF 18 bis 60 eingesetzt wird, wobei die Strukturkennzahl QF ermittelt wird, indem
a) Siliciumprobekörper unter Ausbildung einer Schnittfläche aufgeschnitten werden,
b) auf der Schnittfläche die Flächen der eine längliche Form aufweisenden Ausscheidungen intermetallischer Phasen mit einem Rundheitsgrad > 2 zu einer Flächenzahl A aufsummiert werden,
c) auf der Schnittfläche die Flächen der eine rundliche Form aufweisenden Ausscheidungen intermetallischer Phasen mit einem Rundheitsgrad ≦ 2 zu einer Flächenzahl B aufsummiert werden und
d) der als die Strukturkennzahl QF bezeichnete Quotient aus der Flächenzahl A und der Flächenzahl B gebildet wird.

**2.** Verfahren nach Anspruch 1, wobei wassergranuliertes Silicium eingesetzt wird.

**Claims**

**1.** Process for the preparation of methylchlorosilanes from silicon and methyl chloride in the presence of a copper catalyst and if appropriate promoter substances, in which the production rates of the individual methylchlorosilanes, based on the surface area of the silicon employed, are controlled by the structure of the silicon, characterized in that silicon having the structural parameter QF of 18 to 60 is employed, the structural parameter QF being determined by
a) cutting up silicon test specimens to form a cut surface,
b) totalling on the cut surface the areas of the precipitates of intermetallic phases having a longitudinal shape with a degree of roundness of > 2 to give an area number A,
c) totalling on the cut surface the areas of the precipitates of intermetallic phases having a circular shape with a degree of roundness of ≦ 2 to give an area number B, and

8

d) obtaining the quotient of the area number A and the area number B, called the structural parameter QF.

2. Process according to Claim 1, in which water-granulated silicon is employed.

**Revendications**

1. Procédé de préparation de méthylchlorosilanes à partir de silicium et de chlorométhane, en présence d'un catalyseur au cuivre et éventuellement de substances activatrices, dans lequel on oriente par l'intermédiaire de la structure du silicium les taux de production des différents méthylchlorosilanes rapportés à la surface du silicium utilisé, caractérisé en ce que l'on utilise du silicium ayant une constante de structure QF comprise entre 18 et 60, la constante de structure QF étant déterminée par un procédé selon lequel:
   a) on coupe des éprouvettes de silicium en formant une surface de coupe,
   b) sur la surface de coupe, on totalise les surfaces des dépôts de phases intermétalliques ayant une forme allongée avec un degré de rotondité > 2, pour obtenir une valeur de surface A,
   c) sur la surface de coupe, on totalise les surfaces des dépôts de phases intermétalliques ayant une forme arrondie avec un degré de rotondité ≤ 2, pour obtenir une valeur de surface B, et
   d) on forme le quotient de la valeur de surface A et de la valeur de surface B, qui représente la constante de structure QF.

2. Procédé selon la revendication 1, dans lequel on utilise du silicium granulé dans l'eau.

Fig. 1

100 μm

Fig. 2

Fig. 3

Fig. 4

EP 0 610 807 B1